# EUROPEAN PATENT APPLICATION

(11) **EP 4 497 634 A1**
(43) Date of publication of application: **29.01.2025**
(21) Application number: 23187653.3
(22) Date of filing: 25.07.2023
(51) Int. Cl.: B60Q 5/00

(54) **METHOD AND DEVICE FOR ADJUSTING A HORN SOUND IN A VEHICLE**

(71) Applicant: CARIAD SE, 38440 Wolfsburg (DE)
(72) Inventor: Balamurugan, Shanmugasundaram, 44892 Bochum (DE); Emara, Karim, 45139 Essen (DE); Gollakota, Ravitej, 44894 Bochum (DE); Kilic, Tayfun, 44799 Bochum (DE); Bakacak, Sueleyman, 45149 Essen (DE)
(74) Representative: Hofstetter, Schurack & Partner

(57) **Abstract**

The invention relates to a method for adjusting a horn sound in a vehicle (1), comprising determining a location of the vehicle (1), receiving an indication regarding a horn sound in response to the determined location of the vehicle (1) from a remote computing unit (10), receiving a horn prompt by a user of the vehicle (1), and playing a horn sound in response to the horn prompt and based on the indication regarding the horn sound.

## Description

The present invention relates to a method and a device for adjusting a horn sound in a vehicle as well as a vehicle comprising such a device.

Vehicles typically have a horn function, in particular to gain the attention of persons or other vehicles in the surrounding of the vehicle. However, some locations or areas may require that a horn is not played, for example to protect people from noise pollution.

It is thus an object of the present invention, to provide an improved method and device for adjusting a horn sound in a vehicle.

According to a first aspect, a method for adjusting a horn sound in a vehicle is provided.

Therein, the method comprises the steps of determining a location of the vehicle, receiving an indication regarding a horn sound in response to the determined location of the vehicle from a remote computing unit, receiving a horn prompt by a user of the vehicle and playing a horn sound in response to the horn prompt and based on the indication regarding the horn sound.

The method is particularly suitable to adaptive adjust the horn sound to the current location of the vehicle.

Therein, in a first step, a location of the vehicle is determined.

A location may comprise a current position, in particular an address, a city, a neighborhood, a proximity to a certain poi, point of interest, an orientation and/or a driving direction of the vehicle.

The location may be determined by using a position sensor, such as a GPS and/or GNSS sensor, an, optionally, by using corresponding map data.

A location may, for example, comprise an indication that the vehicle is in or in the proximity of a hospital zone, a school zone, a residential zone and/or in a highway zone.

In a further step, an indication regarding a horn sound in response to the determined location of the vehicle is received from a remote computing unit.

A remote computing unit may be defined as one or more servers, a data center, for example provided by a car manufacturer, a fleet operator or a public or private entity operating the remote computing unit.

The remote computing unit is spaced apart from the vehicle and different therefrom.

The indication regarding a horn may be received through a communication channel, in particular a wireless communication channel, such as a mobile communications channel, in particular 3G, 4G or 5G, Bluetooth, WiFi and/or Car2X, in particular Car2Car or Car2lnfrastructure.

The indication regarding the horn sound may in particular be received in response to a request, a query or a provision of the vehicle to the remote computing unit, for example including the position of the vehicle, which may be transferred via the same or similar communication channels, and, optionally, further information, as will be explained in the following.

The indication regarding the horn sound comprises information regarding a horn sound to be played, as will also be explained in the following.

In particular, there may be a different indication regarding a horn sound to be played depending on the location and in particular depending on the zone identified.

In another step, a horn prompt is received by a user of the vehicle.

A horn prompt, which may also be identified as a horn request, may be identified as an action by a user, typically a driver, of the vehicle, which intends to play or blow the horn of the vehicle. This may be performed by pressing a particular button on the dashboard and/or on the steering wheel, typically the center hub of the steering wheel.

In a further step, a horn sound is played in response to the horn prompt and based on the indication regarding the horn sound.

In particular, the horn sound is changed based on the information comprised in the indication regarding the horn sound.

To play the horn sound may also be identified as blowing the horn, honking or hooting and may be performed by using a playback unit, which is arranged and adapted in or on the vehicle to play a sound that may reach the environment or the surroundings of the vehicle.

Through the method, it is possible to adjust the horn sound according to the environment of the vehicle. Thereby, people who need rest are not disturbed and no noise pollution may be emitted.

According to an embodiment, the indication regarding the horn sound comprises a selection of one of multiple horn sounds stored in the vehicle.

In particular, according to this embodiment, multiple different horn sounds are stored, for example in a memory of the vehicle. The horn sound may be identified as a horn sound image, sound picture, sound pattern, timbre or acoustic pattern.

There may be, for example, a roaring sound, a literal horn sound, an alarm sound and/or any other kind of sound that is suitable to attract the attention of people in the surrounding of the vehicle. In particular, the sound may be repetitive, periodic, continuous, a tone sequence and/or a melody.

These different sounds or sound types may be stored in a memory accessible by the playback unit and one of these sounds is selected based on the indication regarding the horn sound to be played in response to the horn prompt.

Therein, a different horn sound may be selected for a different zone the vehicle is in. For example, a soothing horn sound may be selected in a hospital zone and an alarm sound may be selected in a school zone.

Through this embodiment, it is possible to adjust the sound of the horn to specific locations while still being able to use the horn.

According to an embodiment, the indication regarding the horn sound comprises the horn sound itself.

In particular, in this embodiment, the horn sound to be played in comprised in the indication and is received from the remote computing unit, for example as a sound file, via download.

Therein, in particular, a new horn sound, which has not been previously stored in the vehicle is received and downloaded from the remote computing unit.

It has to be understood that the indication may comprise in one case a selection of multiple available sounds in the vehicle and in another case a new horn sound and that these two embodiments are not mutually exclusive but rather coexist.

In particular, receiving the new horn sound may also comprise an indication to delete one or more horn existing sounds stored in the vehicle, which may be deleted in response to receiving the indication.

Through this embodiment, it is possible to roll out a new sound of the horn be played.

According to an embodiment, the indication regarding the horn sound comprises a volume of the horn sound.

In particular, according to this embodiment, a maximum volume at which the horn sound may be played in response to the horn prompt is received. This may be a value, for example in decibels, or a percentage of a known maximum possible value, such as, 25%, 50%, 75% or 100%. Additionally, the volume may also be set to zero, resulting in no horn sound to be played at all.

The volume of the horn sound may be received with or without an indication regarding the horn sound itself. In particular, only the volume to play a single one horn sound stored in the vehicle may be received, the volume to play a selected one of multiple horn sounds stored in the vehicle may be received and/or the horn sound to be played may be received together with the volume it should be played at.

Therein, the horn sound may be played at a different for a different zone the vehicle is in. For example, a more quieter horn sound may be played at, for example, 25% in a residential zone and a louder horn sound may be played at, for example 100% in a highway zone.

Through this embodiment, it is possible to adjust the volume of the horn to specific locations while still being able to use the horn.

According to an embodiment, the method further comprises determining a horn sound currently activated in the vehicle, wherein the step of receiving an indication regarding the horn sound is performed in response to the determined horn sound.

The horn sound currently activated may be the only one stored in the vehicle or a particular horn sound out of multiple horn sounds currently selected in the vehicle, as described above. In particular, the currently activated horn sound is the horn sound that would be played if the driver would prompt a horn request.

Therein, the currently activated horn sound may be changed, in particular to another one of the stored horn sounds or to a new horn sound, received in response from the remote computing unit.

For example, a particular horn sound is considered outdated and/or unsuitable, which may then be abandoned and exchanged by another horn sound.

Through this embodiment, it is possible to harmonize the horn sound of multiple cars.

According to an embodiment, determining a location of the vehicle comprises determining a current environment around the vehicle.

Therein, according to this embodiment, a current environment or surrounding may be determined. This may be in particular performed additionally or alternatively to determining a position of the vehicle.

For example, one or more imaging units may be used to capture one or more images of the surrounding of the vehicle and symbols, icons and/or road signs may be detected and evaluated by an image processing unit.

Therein, a particular zone may be identified from indications in the image of the surroundings. For example, there may be signs for a hospital, a highway or even a particular no honking sign, in which the horn may be deactivated, or the volume set to zero, as explained above.

Through this embodiment, the environment may be particularly well determined, in particular, if the map data are missing a particular zone.

According to an embodiment, determining a location of the vehicle comprises determining a current route of the vehicle.

Therein, according to this embodiment, a current route may be determined from a navigation unit and/or an autonomous driving unit of the vehicle, which indicated the future route, trajectory or path that the vehicle will eventually take.

Thereby, it is possible to foresee or predict that the vehicle will soon be entering a particular zone and anticipate the horn sound to be changed in due time before reaching the particular zone.

Through this embodiment, a particularly predictive method is provided.

According to an embodiment, the indication regarding the horn sound is based on a requirement from a third party.

In particular, a third party is different from the governing body of the remote computing unit, such as a governmental entity and/or authority, such as a law enforcement agency, a road traffic office or a police department.

Through this embodiment, it is possible to adapt to legal requirements across many vehicles.

For use cases or use situations which may arise in the method and which are not explicitly described here, it may be provided that, in accordance with the method, an error message and/or a prompt for user feedback is output and/or a default setting and/or a predetermined initial state is set.

According to another aspect a device for adjusting a horn sound in a vehicle is provided. The device may comprise a data processing unit adapted to perform an embodiment of the method according to the invention.

For this purpose, the data processing unit may comprise at least one microprocessor and/or at least one microcontroller and/or at least one FPGA (field programmable gate array) and/or at least one DSP (digital signal processor). In particular, a CPU (Central Processing Unit), a GPU (Graphical Processing Unit) or an NPU (Neural Processing Unit) can be used as the microprocessor in each case. Furthermore, the data processing unit may have program code which is arranged to perform the embodiment of the method according to the invention when executed by the data processing unit. The program code may be stored in a data memory unit of the data processing unit. The data processing unit may be based, for example, on at least one circuit board and/or on at least one SoC (system on chip).

According to a further aspect, a vehicle comprising such a device is disclosed.

The vehicle according to the invention is preferably configured as a motor vehicle, for example an electric, hybrid, petrol and/or diesel motor vehicle, in particular a passenger car or truck, or a passenger bus or motorcycle.

As a further aspect, the invention also comprises a computer-readable storage medium comprising program code which, when executed by a computer or a computer network, causes the computer or computer network to execute an embodiment of the method according to the invention. The storage medium may be provided at least in part as a non-volatile data storage (e.g., as a flash memory and/or as an SSD - solid state drive) and/or at least in part as a volatile data storage (e.g., as a RAM - random access memory). The storage medium may be arranged in the computer or computer network. However, the storage medium may also be operated, for example, as a so-called app store server and/or cloud server on the Internet. A processor circuit with, for example, at least one microprocessor may be provided by the computer or computer network. The program code may be provided as binary code and/or as assembly code and/or as source code of a programming language (e.g. C) and/or as program script (e.g. Python).

The invention also encompasses combinations of the features of the described embodiments. Thus, the invention also encompasses realizations each having a combination of the features of more than one of the described embodiments, provided that the embodiments have not been described as mutually exclusive.

With respect to the embodiments of the device, the vehicle and the storage medium, and the associated advantages, reference is made to the previously described embodiments of the method and the advantages thereof.

In the following, example embodiments of the invention are described with respect to the Figure. Therein,

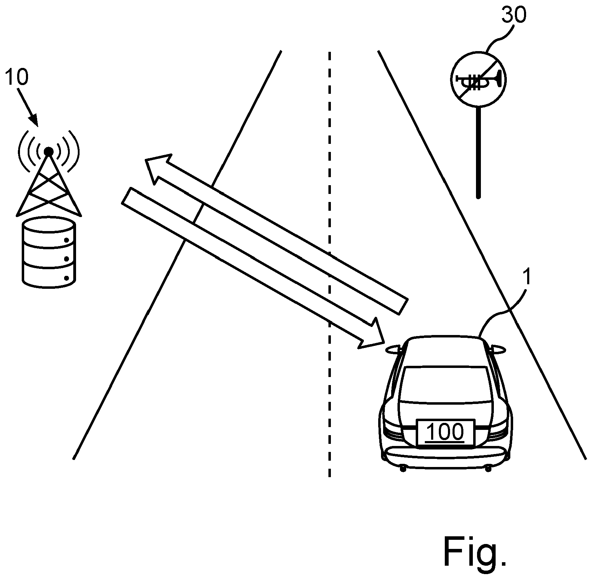

- Fig. 1: shows a schematic overview of an embodiment of a method and device for adjusting a horn sound in a vehicle.

The example embodiments explained below are preferred embodiments of the invention. In the embodiments, the described components of the embodiments each represent individual features of the invention that are to be considered independently of one another, each of which also independently further the invention. Therefore, the disclosure is intended to include combinations of the features of the embodiments other than those shown. Furthermore, the described embodiments may also be supplemented by further of the already described features of the invention.

In the figures, identical reference signs denote elements with identical functions.

Fig. 1 shows a schematic overview of an embodiment of a method and device 100 for adjusting a horn sound in a vehicle 1.

Therein, the vehicle 1 comprises the device 100 for carrying out the method steps being described in the following.

The device 100 is adapted to determining a location of the vehicle 1. In particular, the device 100 is adapted to determine a current environment around the vehicle 1, in particular by recognizing a sign 30, which indicates that the vehicle is currently in a no honking zone. The device 100 is also adapted to determine a current route of the vehicle 1.

The device 100 is further adapted to receive an indication regarding a horn sound in response to the determined location, the current environment and/or the current route of the vehicle 1, from a remote computing unit 10 which is distant from the vehicle 1. Therein, the indication regarding the horn sound is based on a requirement from a third party, such as a governmental authority.

The device 100 is further adapted to receive a horn prompt by a user of the vehicle 1 and to play a horn sound in response to the horn prompt and based on the indication regarding the horn sound.

Therein, the indication regarding the horn sound comprises a selection of one of multiple horn sounds stored in the vehicle 1.

Alternatively, or additionally, the indication regarding the horn sound comprises the horn sound itself.

Alternatively, or additionally, the indication regarding the horn sound comprises a volume of the horn sound.

Therein, the device 100 is further adapted to determine a horn sound currently activated in the vehicle 1, wherein the step of receiving an indication regarding the horn sound is performed in response to the determined horn sound.

In summary, the example embodiment show, how an intelligent honking system may be provided for a vehicle, which is particularly adaptive of the location and the surroundings of the vehicle.

## Claims

1. Method for adjusting a horn sound in a vehicle (1), comprising:
- determining a location of the vehicle (1);
- receiving an indication regarding a horn sound in response to the determined location of the vehicle (1) from a remote computing unit (10);
- receiving a horn prompt by a user of the vehicle (1); and
- playing a horn sound in response to the horn prompt and based on the indication regarding the horn sound.

2. Method according to claim 1,
wherein the indication regarding the horn sound comprises a selection of one of multiple horn sounds stored in the vehicle (1).

3. Method according to any one of the preceding claims,
wherein the indication regarding the horn sound comprises the horn sound.

4. Method according to any one of the preceding claims,
wherein the indication regarding the horn sound comprises a volume of the horn sound.

5. Method according to any one of the preceding claims, further comprising:
- determining a horn sound currently activated in the vehicle (1); and wherein the step of receiving an indication regarding the horn sound is performed in response to the determined horn sound.

6. Method according to any one of the preceding claims,
wherein determining a location of the vehicle (1) comprises determining a current environment around the vehicle (1).

7. Method according to any one of the preceding claims,
wherein determining a location of the vehicle comprises determining a current route of the vehicle (1).

8. Method according to any one of the preceding claims,
wherein the indication regarding the horn sound is based on a requirement from a third party.

9. Device (100) for adjusting a horn sound in a vehicle (1), the device (100) being configured to perform a method according to any one of the preceding claims.

10. Vehicle (1), comprising a device (100) according to claim 9.
